# EUROPÄISCHE PATENTANMELDUNG

(11) **EP 4 067 583 A1**
(43) Veröffentlichungstag der Anmeldung: **05.10.2022**
(21) Anmeldenummer: 22161836.6
(22) Anmeldetag: 14.03.2022
(51) Int. Cl.: E03C 1/04, E03C 1/05

(54) **ZWEIWEGEVENTIL FÜR EINE SANITÄRARMATUR UND SANITÄRARMATUR MIT EINEM SOLCHEN ZWEIWEGEVENTIL**

(30) Priorität: 30.03.2021 DE 102021108021
(71) Anmelder: Grohe AG, 58675 Hemer (DE)
(72) Erfinder: BRAND, Henning, 44263 Dortmund (DE); Tueshaus, Jan Philipp, 58675 Hemer (DE); Berghoff, Daniel, 44229 Dortmund (DE)

(57) **Zusammenfassung**

Zweiwegeventil (1) für eine Sanitärarmatur (2), zumindest aufweisend:
- ein Ventilgehäuse (3) mit einem Flüssigkeitszulauf (4), einem ersten Flüssigkeitsablauf (5) und einem zweiten Flüssigkeitsablauf (6);
- einen Ventilkörper (7), der zumindest teilweise in dem Ventilgehäuse (3) angeordnet ist; und
- eine Exzenterwelle (8), durch die der Ventilkörper (7) in eine erste Freigabestellung (9) zur Freigabe des ersten Flüssigkeitsablaufs (5) und in eine zweite Freigabestellung zur Freigabe des zweiten Flüssigkeitsablaufs (6) verstellbar ist.

Zudem wird eine Sanitärarmatur (2) mit einem solchen Zweiwegeventil (1) vorgeschlagen.

## Beschreibung

Die vorliegende Erfindung betrifft ein Zweiwegeventil für eine Sanitärarmatur und eine Sanitärarmatur mit einem solchen Zweiwegeventil. Solche Sanitärarmaturen dienen insbesondere der bedarfsgerechten Bereitstellung einer Flüssigkeit an Waschbecken, Spülbecken, Duschen oder Badewannen.

Es sind Sanitärarmaturen bekannt, mit denen eine Flüssigkeit mit unterschiedlichen Strahlarten, beispielsweise in Form von Regenstrahlen, Vollstrahlen, Massagestrahlen oder Perlstrahlen, abgebbar sind. Die Umstellung zwischen den einzelnen Strahlarten kann über manuell betätigbare Betätigungselemente an den Sanitärarmaturen erfolgen, über die beispielsweise Ventile in Flüssigkeitskanälen der Sanitärarmaturen steuerbar sind, sodass die Flüssigkeit einem Strahlbildner für die gewünschte Strahlart zuführbar ist. Die bekannten Ventile weisen einen hohen Bauraumbedarf auf, sodass diese entweder nicht in die Sanitärarmaturen integriert werden können oder die Sanitärarmaturen besonders groß ausgeführt werden müssen. Dies schränkt jedoch die Gestaltungsfreiheit der Sanitärarmaturen ein und erhöht zudem deren Materialbedarf.

Aufgabe der Erfindung ist es daher, die mit Bezug auf den Stand der Technik geschilderten Probleme zumindest teilweise zu lösen und insbesondere ein Zweiwegeventil für eine Sanitärarmatur anzugeben, das einen geringen Bauraumbedarf aufweist. Zudem soll eine Sanitärarmatur angegeben werden, deren Zweiwegeventil einen geringen Bauraumbedarf aufweist.

Diese Aufgaben werden gelöst mit einem Zweiwegeventil und einer Sanitärarmatur gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Zweiwegeventil für eine Sanitärarmatur bei, das zumindest Folgendes aufweist:
- ein Ventilgehäuse mit einem Flüssigkeitszulauf, einem ersten Flüssigkeitsablauf und einem zweiten Flüssigkeitsablauf;
- einen Ventilkörper, der zumindest teilweise in dem Ventilgehäuse angeordnet ist; und
- eine Exzenterwelle, durch die der Ventilkörper in eine erste Freigabestellung zur Freigabe des ersten Flüssigkeitsablaufs und in eine zweite Freigabestellung zur Freigabe des zweiten Flüssigkeitsablaufs verstellbar ist.

Die Sanitärarmatur dient insbesondere der bedarfsgerechten Bereitstellung von Flüssigkeiten, wie insbesondere Wasser, an Spülbecken, Waschbecken, Duschen und/oder Badewannen. Hierzu kann der Sanitärarmatur insbesondere Kaltwasser mit einer Kaltwassertemperatur und Warmwasser mit einer Warmwassertemperatur zuführbar sein. Das Kaltwasser und Warmwasser ist durch die Sanitärarmatur insbesondere, beispielsweise mittels eines Mischventils oder einer (Thermostat-)Mischkartusche, zu Mischwasser mit einer gewünschten Mischwassertemperatur mischbar. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Mischventil oder die (Thermostat-)Mischkartusche können durch einen Benutzer mittels eines (ersten) Betätigungselements der Sanitärarmatur, beispielsweise nach Art eines Hebels, betätigbar und/oder in einem Armaturengehäuse der Sanitärarmatur angeordnet sein. Das Armaturengehäuse besteht insbesondere zumindest teilweise aus Kunststoff und/oder (Guss-)Metall, wie zum Beispiel Messing. Das Armaturengehäuse ist an einem Träger, beispielsweise einer Arbeitsplatte, Spülbecken, Waschbecken, Badewanne oder Dusche, befestigbar. Weiterhin kann das Armaturengehäuse einen (hervorstehenden bzw. abzweigenden) Auslauf aufweisen, der starr oder bewegbar mit dem Armaturengehäuse verbunden ist. Der Auslauf kann zumindest teilweise rohrförmig ausgebildet und/oder Teil des Armaturengehäuses sein.

Die Flüssigkeit ist durch die Sanitärarmatur in einer Mehrzahl von Strahlarten abgebbar. Hierzu weist die Sanitärarmatur zumindest einen ersten Strahlbildner und einen zweiten Strahlbildner auf. Insbesondere weist die Sanitärarmatur nur den ersten Strahlbildner und den zweiten Strahlbildner auf, sodass die Flüssigkeit in der ersten Strahlart und/oder der zweiten Strahlart abgebbar ist. Bei den Strahlarten kann es sich beispielsweise um Regenstrahlen, Vollstrahlen, Massagestrahlen und/oder Perlstrahlen handeln. Insbesondere kann die Flüssigkeit bei der Benutzung der Sanitärbrause entweder in einer einzigen Strahlart oder in zwei unterschiedlichen Strahlarten gleichzeitig abgebbar sein. Die Sanitärarmatur kann je Strahlart einen Strahlbildner aufweisen. Der erste Strahlbildner und/oder der zweite Strahlbildner können zumindest eine Düse und/oder zumindest eine Auslassöffnung für die Flüssigkeit aufweisen, durch die zumindest ein für die jeweilige Strahlart spezifischer Sprühstrahl der Flüssigkeit bildbar ist.

Das Zweiwegeventil dient insbesondere zum Wechseln der Strahlart. Mit dem Zweiwegeventil kann die Flüssigkeit wahlweise dem ersten Strahlbildner und/oder dem zweiten Strahlbildner zuführbar sein. Das Zweiwegeventil kann insbesondere zumindest teilweise in dem Armaturengehäuse und/oder dem Auslauf des Armaturengehäuses der Sanitärarmatur angeordnet sein. Das Zweiwegeventil weist ein Ventilgehäuse auf, das zumindest teilweise aus Kunststoff und/oder Metall, wie zum Beispiel Messing, bestehen kann. Weiterhin kann das Ventilgehäuse beispielsweise nach Art eines Kunststoffspritzgussteils ausgebildet sein. Zudem weist das Zweiwegeventil einen Flüssigkeitszulauf für die Flüssigkeit bzw. das Mischwasser, einen ersten Flüssigkeitsablauf und zweiten Flüssigkeitsablauf auf. Der Flüssigkeitszulauf ist insbesondere flüssigkeitsleitend mit dem Mischventil oder der (Thermostat-)Mischkartusche verbindbar. Der erste Flüssigkeitsablauf kann über eine erste Ablaufleitung mit dem ersten Strahlbildner und der zweite Flüssigkeitsablauf über eine zweite Ablaufleitung mit dem zweiten Strahlbildner flüssigkeitsleitend verbindbar sein. Der erste Flüssigkeitsablauf und der zweite Flüssigkeitsablauf können zumindest teilweise parallel zueinander verlaufen und/oder parallel zueinander ausgerichtet sein. Das Zweiwegeventil weist einen Ventilkörper auf, der durch eine Exzenterwelle in eine erste Freigabestellung zur Freigabe des ersten Flüssigkeitsablaufs und in eine zweite Freigabestellung zur Freigabe des zweiten Flüssigkeitsablaufs verstellbar ist. In der ersten Freigabestellung ist der erste Flüssigkeitsablauf geöffnet und der zweite Flüssigkeitsablauf geschlossen. Entsprechend ist in der zweiten Freigabestellung der erste Flüssigkeitsablauf geschlossen und der zweite Flüssigkeitsablauf geöffnet. Der Ventilkörper kann nach Art eines Schiebers ausgebildet sein. Weiterhin kann der Ventilkörper zumindest teilweise kolbenförmig ausgebildet sein und/oder sich entlang einer, insbesondere geraden, ersten Längsachse erstrecken. Der Ventilkörper kann eine erste Dichtfläche für einen ersten Ventilsitz des ersten Flüssigkeitsablaufs und eine zweite Dichtfläche für einen zweiten Ventilsitz des zweiten Flüssigkeitsablaufs aufweisen. Bei der ersten Dichtfläche handelt es sich insbesondere um diejenige Fläche des Ventilkörpers, mit dem der Ventilkörper den ersten Ventilsitz kontaktiert, wenn sich der Ventilkörper in der zweiten Freigabestellung befindet. Bei der zweiten Dichtfläche handelt es sich entsprechend insbesondere um diejenige Fläche des Ventilkörpers, mit dem der Ventilkörper den zweiten Ventilsitz kontaktiert, wenn sich der Ventilkörper in der ersten Freigabestellung befindet. Die erste Dichtfläche und/oder die zweite Dichtfläche können an einer Ventilsitzdichtung ausgebildet sein. Die Ventilsitzdichtung kann sich beispielsweise um eine Umfangsfläche des Ventilkörpers erstrecken und/oder an der Umfangsfläche des Ventilkörpers angeordnet sein. Dabei kann sich die Ventilsitzdichtung um die erste Längsachse des Ventilkörpers erstrecken. Weiterhin kann die Ventilsitzdichtung nach Art eines O-Rings ausgebildet sein. Zudem ist die Ventilsitzdichtung in dem Ventilgehäuse insbesondere mit dem Ventilkörper verstellbar. Der Ventilkörper ist insbesondere zumindest teilweise in einem in dem Ventilgehäuse ausgebildeten Ventilkörperraum angeordnet. Der Ventilkörperraum kann zumindest teilweise nach Art eines Zylinders ausgebildet sein. Zudem können der Flüssigkeitszulauf, der erste Flüssigkeitsablauf und/oder der zweite Flüssigkeitsablauf in den Ventilkörperraum münden. Eine erste Mündung des ersten Flüssigkeitsablaufs und eine zweite Mündung des zweiten Flüssigkeitsablaufs können dabei parallel zu der ersten Längsachse des Ventilkörpers voneinander beabstandet sein. Ein Abstand zwischen der ersten Mündung des ersten Flüssigkeitsablaufs und der zweiten Mündung des zweiten Flüssigkeitsablaufs kann parallel zu der ersten Längsachse des Ventilkörpers beispielsweise 1 mm (Millimeter) bis 10 mm betragen. Weiterhin kann der Ventilkörperraum durch ein Verschlussmittel, beispielsweise nach Art eines Deckels, verschlossen sein, sodass aus dem Ventilkörperraum insbesondere keine Flüssigkeit in eine Umgebung des Zweiwegeventils austreten kann. Der Ventilkörper ist zwischen der ersten Freigabestellung und der zweiten Freigabestellung durch die Exzenterwelle verstellbar. Die Exzenterwelle erstreckt sich insbesondere entlang einer zweiten Längsachse und/oder ist um eine Drehachse drehbar. Die zweite Längsachse und die Drehachse können koaxial zueinander und/oder orthogonal zu der ersten Längsachse des Ventilkörpers verlaufen. Die Exzenterwelle erstreckt sich insbesondere mit einem Exzenterabschnitt durch eine Exzenteraufnahme des Ventilkörpers. Der Exzenterabschnitt kann orthogonal zu der Drehachse bzw. zweiten Längsachse der Exzenterwelle einen runden, ovalen, eckigen, rechteckigen und/oder viereckigen Querschnitt aufweisen. Weiterhin kann der Querschnitt des Exzenterabschnitts nach Art von zwei mit einem Verbindungssteg verbundenen Halbkreisen ausgebildet sein. Der Exzenterabschnitt kann eine Zentrumsachse aufweisen, die parallel zu der Drehachse der Exzenterwelle und/oder mit einem Abstand zu der Drehachse der Exzenterwelle verläuft. Hierdurch kann bei einer Drehung der Exzenterwelle um die Drehachse eine Außenfläche des Exzenterabschnitts entlang einer Innenfläche der Exzenteraufnahme gleiten, sodass eine Drehbewegung der Exzenterwelle zu einer translatorischen Bewegung des Ventilkörpers führt. Die Exzenteraufnahme kann beispielsweise einen D-förmigen Querschnitt aufweisen. Zudem kann die Exzenteraufnahme nach Art einer Kulisse für den Exzenterabschnitt ausgebildet sein.

Der Ventilkörper kann zwischen der ersten Freigabestellung und den zweiten Freigabestellung linear verstellbar sein. Der Ventilkörper ist in dem Ventilkörperraum zwischen der ersten Freigabestellung und der zweiten Freigabestellung insbesondere translatorisch und/oder nicht rotatorisch verstellbar. Dies kann insbesondere bedeuten, dass der Ventilkörper zwischen der ersten Freigabestellung und der zweiten Freigabestellung entlang eines geraden Stellwegs verstellbar ist. Der Stellweg verläuft insbesondere parallel zu der ersten Längsachse des Ventilkörpers.

Der Ventilkörper kann in der zweiten Freigabestellung einen ersten Ventilsitz des ersten Flüssigkeitsablaufs und in der ersten Freigabestellung einen zweiten Ventilsitz des zweiten Flüssigkeitsablaufs verschließen.

Der erste Ventilsitz oder der zweite Ventilsitz können sich um den Ventilkörper erstrecken. Der erste Ventilsitz und/oder der zweite Ventilsitz können ringförmig ausgebildet sein und/oder sich um den Ventilkörper erstrecken. Weiterhin können der erste Ventilsitz und/oder der zweite Ventilsitz jeweils an einer Kante des Ventilgehäuses ausgebildet sein. Die Kanten können beispielsweise an einer inneren Umfangsfläche des Ventilkörperraums ausgebildet sein. Beispielsweise können die Kanten durch eine Nut des Ventilkörperraums ausgebildet sein. Bei der Verstellung des Ventilkörpers zwischen der ersten Freigabestellung und der zweiten Freigabestellung kann insbesondere die Ventilsitzdichtung in der Nut verstellbar sein.

Die Exzenterwelle kann durch einen Elektromotor antreibbar sein. Der Elektromotor kann beispielsweise durch eine Steuerung des Zweiwegeventils steuerbar sein.

Der Elektromotor kann in einer Aufnahme des Ventilgehäuses angeordnet sein. Insbesondere ist der Elektromotor in der Aufnahme formschlüssig oder reibschlüssig befestigt. Weiterhin kann der Elektromotor in der Aufnahme durch zumindest eine Schraube befestigt sein. Hierdurch kann ein durch den Elektromotor erzeugtes Drehmoment durch das Ventilgehäuse abgestützt werden.

Der Elektromotor kann mit einem ersten längsseitigen Ende der Exzenterwelle verbunden sein. Insbesondere kann eine Motorwelle des Elektromotors mit dem ersten längsseitigen Ende der Exzenterwelle verbunden sein.

Ein zweites längsseitiges Ende der Exzenterwelle kann in einem Lager gelagert sein. Insbesondere ist die Exzenterwelle in dem Lager drehbar gelagert. Das Lager kann hierzu insbesondere als Öffnung oder Bohrung in dem Ventilgehäuse oder einem Lagerelement des Ventilgehäuses ausgebildet sein. Das Lagerelement kann beispielsweise über zumindest eine Schraube an dem Ventilgehäuse befestigt sein. Weiterhin kann das Lager konzentrisch zu der Drehachse der Exzenterwelle ausgebildet sein.

Die Exzenterwelle kann mit einem Drehwinkel von 90° bis 180° drehbar sein. Bevorzugt kann die Exzenterwelle mit einem Drehwinkel von 170° bis 180°, besonders bevorzugt (im Wesentlichen) 180°, drehbar sein. Dies kann insbesondere bedeuten, dass die Exzenterwelle zum Verstellen des Ventilkörpers zwischen der ersten Freigabestellung und zweiten Freigabestellung um 90° bis 180°, bevorzugt 170° bis 180°, besonders bevorzugt (im Wesentlichen) 180°, drehbar ist. Ein Erreichen der ersten Freigabestellung und/oder der zweiten Freigabestellung kann durch die Steuerung des Elektromotors beispielsweise über ein Ansteigen eines Drehmoments erkennbar sein, sodass die Steuerung bei Erreichen der ersten Freigabestellung und/oder der zweiten Freigabestellung den Elektromotor abschalten kann.

Einem weiteren Aspekt folgend wird auch eine Sanitärarmatur angegeben, die zumindest Folgendes aufweist:
- ein Armaturengehäuse mit einem ersten Strahlbildner und einem zweiten Strahlbildner; und
- ein erfindungsgemäßes Zweiwegeventil, mit dem eine Flüssigkeit wahlweise dem ersten Strahlbildner oder dem zweiten Strahlbildner zuführbar ist.

Für weitere Einzelheiten zu der Sanitärarmatur wird vollumfänglich auf die Beschreibung des Zweiwegeventils verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Zweiwegeventil in einem Längsschnitt;
- Fig. 2:: das Zweiwegeventil in einer Schnittdarstellung;
- Fig. 3:: das Zweiwegeventil in einer Draufsicht; und
- Fig. 4:: eine Sanitärarmatur mit dem Zweiwegeventil in einer Schnittdarstellung.

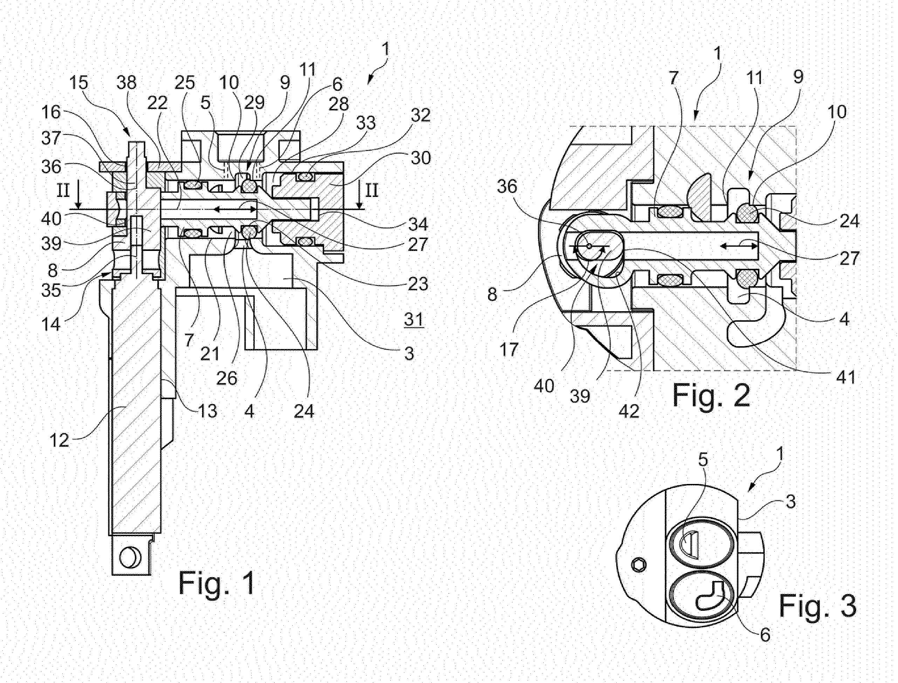

Die Fig. 1 zeigt ein Zweiwegeventil 1 in einem Längsschnitt. Das Zweiwegeventil 1 umfasst ein Ventilgehäuse 3 mit einem Flüssigkeitszulauf 4, einem ersten Flüssigkeitsablauf 5 und einem zweiten Flüssigkeitsablauf 6. In dem Ventilgehäuse 3 ist ein Ventilkörperraum 21 ausgebildet, in dem ein Ventilkörper 7 angeordnet ist. Der Ventilkörperraum 21 ist nach Art eines Zylinders und der Ventilkörper 7 nach Art eines Kolbens ausgebildet. Weiterhin erstrecken sich der Ventilkörperraum 21 und der Ventilkörper 7 entlang einer ersten Längsachse 22. Der Ventilkörper 7 weist an einer Umfangsfläche 23 eine Ventilsitzdichtung 24 auf, die nach Art eines O-Rings ausgebildet ist. Zudem weist der Ventilkörper 7 an seiner Umfangsfläche 23 eine erst Dichtung 25 in Form eines weiteren O-Rings auf. Die Ventilsitzdichtung 24 und die erste Dichtung 25 sind mit dem Ventilkörper 7 in dem Ventilkörperraum 21 des Ventilgehäuses 3 bewegbar. In der Fig. 1 befindet sich der Ventilkörper 7 in einer ersten Freigabestellung 9. In der ersten Freigabestellung 9 kontaktiert die Ventilsitzdichtung 24 einen ringförmigen zweiten Ventilsitz 11, sodass der erste Flüssigkeitsablauf 5 geöffnet und der zweite Flüssigkeitsablauf 6 geschlossen sind. Der zweite Ventilsitz 11 ist an einer inneren Umfangsfläche 29 des Ventilkörperraums 21 ausgebildet. In der ersten Freigabestellung 9 kann Flüssigkeit über den Flüssigkeitszulauf 4 in einer zur ersten Längsachse 22 radialen Richtung nach innen in einen ersten Ringraum 26 des Ventilkörperraums 21 strömen, der zwischen der Ventilsitzdichtung 24 und der ersten Dichtung 25 ausgebildet ist. Den ersten Ringraum 26 kann die Flüssigkeit über den ersten Flüssigkeitsablauf 5 des Ventilgehäuses 3 verlassen. Der Ventilkörper 7 ist durch eine Exzenterwelle 8 parallel zu der ersten Längsachse 22 entlang eines Stellwegs 27 in eine zweite Freigabestellung verstellbar, in der die Ventilsitzdichtung 24 einen ringförmigen ersten Ventilsitz 10 kontaktiert, sodass der zweite Flüssigkeitsablauf 6 geöffnet und der erste Flüssigkeitsablauf 5 geschlossen sind. Der erste Ventilsitz 10 ist an der inneren Umfangsfläche 29 des Ventilkörperraums 21 ausgebildet. In der zweiten Freigabestellung kann Flüssigkeit über den Flüssigkeitszulauf 4 in der zur ersten Längsachse 22 radialen Richtung nach innen in einen zweiten Ringraum 28 des Ventilkörperraums 21 strömen, der auf einer zu dem ersten Ringraum 26 gegenüberliegenden Seite der Ventilsitzdichtung 24 ausgebildet ist. Den zweiten Ringraum 28 kann die Flüssigkeit über den zweiten Flüssigkeitsablauf 6 des Ventilgehäuses 3 verlassen. Der zweite Ringraum 28 ist zudem zwischen der Ventilsitzdichtung 24 und einem Verschlussmittel 30 des Ventilkörperraums 21 ausgebildet. Das Verschlussmittel 30 ist nach Art eines Deckels ausgebildet und verschließt den Ventilkörperraum 21 gegenüber einer Umgebung 31 des Zweiwegeventils 1. Ein Spalt 33 zwischen dem Verschlussmittel 30 und dem Ventilgehäuse 3 ist durch eine zweite Dichtung 32 abgedichtet, sodass über den Spalt 33 keine Flüssigkeit aus dem Ventilgehäuse 3 austreten kann. Die zweite Dichtung 32 ist nach Art eines O-Rings ausgebildet. Das Verschlussmittel 30 weist eine Bohrung 34 auf, in der der Ventilkörper 7 verstellbar gelagert ist.

Das Ventilgehäuse 3 weist eine Aufnahme 13 für einen Elektromotor 12 auf, in der der Elektromotor 12 verdrehfest zu dem Ventilgehäuse 3 angeordnet ist. Eine Antriebswelle 35 des Elektromotors 12 ist mit einem ersten längsseitigen Ende 14 der Exzenterwelle 8 verbunden, sodass die Exzenterwelle 8 durch den Elektromotor 12 um eine Drehachse 36 bzw. eine zweite Längsachse 37 der Exzenterwelle 8 drehbar ist. Die Drehachse 36 und die zweite Längsachse 37 verlaufen orthogonal zu der ersten Längsachse 22 des Ventilkörpers 7 bzw. des Ventilkörperraums 21. Ein zweites längsseitiges Ende 15 der Exzenterwelle 8 ist in einem Lager 16 drehbar gelagert, das in einem Lagerelement 38 des Ventilgehäuses 3 ausgebildet ist. Die Exzenterwelle 8 erstreckt sich mit einem Exzenterabschnitt 39 durch eine Exzenteraufnahme 40 des Ventilkörpers 7. Die Exzenteraufnahme 40 erstreckt sich orthogonal zu der ersten Längsachse 22 durch den Ventilkörper 21.

Die Fig. 2 zeigt das Zweiwegeventil 1 in einer Schnittdarstellung entlang einer in der Fig. 1 gezeigten Schnittlinie II-II. Die Exzenterwelle 8 ist durch den in der Fig. 1 gezeigten Elektromotor 12 um die Drehachse 36 mit einem Drehwinkel 17 von 180° drehbar. Um den Ventilkörper 7 aus der hier gezeigten ersten Freigabestellung 9, in der die Ventilsitzdichtung 24 an dem ersten Ventilsitz 10 anliegt, in die zweite Freigabestellung, in der die Ventilsitzdichtung 24 an dem zweiten Ventilsitz 11 anliegt, zu verstellen, ist die Exzenterwelle 8 im Uhrzeigersinn um 180° drehbar. Dabei gleitet eine Außenfläche 41 des Exzenterabschnitts 39 an einer Innenfläche 42 der Exzenteraufnahme 40, sodass der Ventilkörper 7 entlang des Stellwegs 27 in die zweite Freigabestellung verstellt wird. Hierzu weist die Exzenteraufnahme 40 orthogonal zu der Drehachse 36 einen D-förmigen Querschnitt auf. Durch den D-förmigen Querschnitt der Exzenteraufnahme 40 ist der Drehwinkel 17 der Exzenterwelle 8 auf 180° limitiert. Um den Ventilkörper 7 wieder zurück in die erste Freigabestellung 9 zu verstellen, ist die Exzenterwelle 8 gegen den Uhrzeigersinn um 180° um die Drehachse 36 drehbar.

Die Fig. 3 zeigt das Zweiwegeventil 1 in einer Draufsicht. Zu erkennen sind hier insbesondere der erste Flüssigkeitsablauf 5 und der zweite Flüssigkeitsablauf 6 des Ventilgehäuses 3.

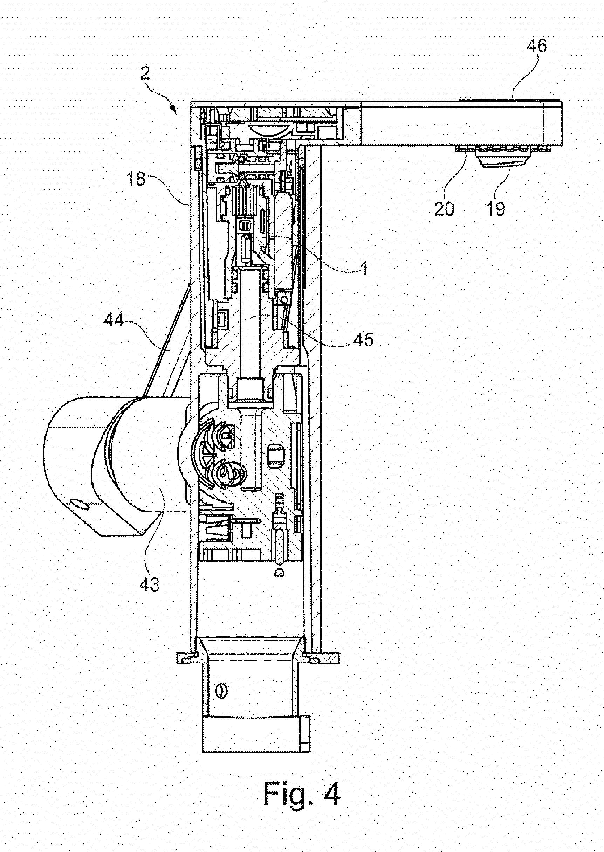

Die Fig. 4 zeigt eine Sanitärarmatur 2 in einem Längsschnitt. Die Sanitärarmatur 2 weist ein Armaturengehäuse 18 auf, in dem ein Mischventil 43 angeordnet ist. Durch das Mischventil 43 sind Kaltwasser und Warmwasser zu Mischwasser mit einer gewünschten Mischwassertemperatur mischbar. Das Mischventil 43 ist über ein Betätigungselement 44 betätigbar, das hier nach Art eines Hebels ausgebildet ist. Über das Betätigungselement 44 ist die Mischwassertemperatur und eine Abgabemenge des Mischwassers einstellbar. Ein hier nicht zu erkennender Mischwasserauslass des Mischventils 43 ist über einen Mischwasserkanal 45 mit dem in den Fig. 1 und 2 gezeigten Flüssigkeitszulauf 4 des Zweiwegeventils 1 verbunden. Das Zweiwegeventil 1 ist ebenfalls innerhalb des Armaturengehäuses 18 angeordnet. Der in den Fig. 1 und 3 gezeigte erste Flüssigkeitsablauf 5 des Zweiwegeventils 1 ist mit einem ersten Strahlbildner 19 der Sanitärarmatur 2 und der zweite Flüssigkeitsablauf 6 des Zweiwegeventils 1 mit einem zweiten Strahlbildner 20 der Sanitärarmatur 2 verbunden. Somit ist das Mischwasser durch das Zweiwegeventil 1 wahlweise dem ersten Strahlbildner 19 oder dem zweiten Strahlbildner 20 zuführbar. Zudem weist die Sanitärarmatur 2 einen Sensor 46 auf, der hier nach Art eines Infrarotsensors ausgebildet ist. Der Sensor 46 ist datenleitend mit einer Steuerung der Sanitärarmatur 2 verbunden, durch die das Zweiwegeventil 1 bzw. der in der Fig. 1 gezeigte Elektromotor 12 des Zweiwegeventils 1 steuerbar ist. Ein Benutzer der Sanitärarmatur 2 kann durch Betätigung des Sensors 46 das Zweiwegeventil 1 umstellen, sodass das Mischwasser entweder über den ersten Strahlbildner 19 oder den zweiten Strahlbildner 20 abgebbar ist.

Die vorliegende Erfindung ermöglicht insbesondere die Ausbildung eines Zweiwegeventils mit einem geringen Bauraumbedarf.

### Bezugszeichenliste

- 1: Zweiwegeventil
- 2: Sanitärarmatur
- 3: Ventilgehäuse
- 4: Flüssigkeitszulauf
- 5: erster Flüssigkeitsablauf
- 6: zweiter Flüssigkeitsablauf
- 7: Ventilkörper
- 8: Exzenterwelle
- 9: erste Freigabestellung
- 10: erster Ventilsitz
- 11: zweiter Ventilsitz
- 12: Elektromotor
- 13: Aufnahme
- 14: erstes längsseitiges Ende
- 15: zweites längsseitiges Ende
- 16: Lager
- 17: Drehwinkel
- 18: Armaturengehäuse
- 19: erster Strahlbildner
- 20: zweiter Strahlbildner
- 21: Ventilkörperraum
- 22: erste Längsachse
- 23: Umfangsfläche
- 24: Ventilsitzdichtung
- 25: erste Dichtung
- 26: erster Ringraum
- 27: Stellweg
- 28: zweiter Ringraum
- 29: innere Umfangsfläche
- 30: Verschlussmittel
- 31: Umgebung
- 32: zweite Dichtung
- 33: Spalt
- 34: Bohrung
- 35: Antriebswelle
- 36: Drehachse
- 37: zweite Längsachse
- 38: Lagerelement
- 39: Exzenterabschnitt
- 40: Exzenteraufnahme
- 41: Außenfläche
- 42: Innenfläche
- 43: Mischventil
- 44: Betätigungselement
- 45: Mischwasserkanal
- 46: Sensor

## Patentansprüche

1. Zweiwegeventil (1) für eine Sanitärarmatur (2), zumindest aufweisend:
- ein Ventilgehäuse (3) mit einem Flüssigkeitszulauf (4), einem ersten Flüssigkeitsablauf (5) und einem zweiten Flüssigkeitsablauf (6);
- einen Ventilkörper (7), der zumindest teilweise in dem Ventilgehäuse (3) angeordnet ist; und
- eine Exzenterwelle (8), durch die der Ventilkörper (7) in eine erste Freigabestellung (9) zur Freigabe des ersten Flüssigkeitsablaufs (5) und in eine zweite Freigabestellung zur Freigabe des zweiten Flüssigkeitsablaufs (6) verstellbar ist.

2. Zweiwegeventil (1) nach Patentanspruch 1, wobei der Ventilkörper (7) zwischen der ersten Freigabestellung (9) und der zweiten Freigabestellung linear verstellbar ist.

3. Zweiwegeventil (1) nach einem der vorhergehenden Patentansprüche, wobei der Ventilkörper (7) in der zweiten Freigabestellung einen ersten Ventilsitz (10) des ersten Flüssigkeitsablaufs (5) und in der ersten Freigabestellung (9) einen zweiten Ventilsitz (11) des zweiten Flüssigkeitsablaufs (6) verschließt.

4. Zweiwegeventil (1) nach Patentanspruch 3, wobei sich der erste Ventilsitz (10) oder der zweite Ventilsitz (11) um den Ventilkörper (7) erstrecken.

5. Zweiwegeventil (1) nach einem der vorhergehenden Patentansprüche, wobei die Exzenterwelle (8) durch einen Elektromotor (12) antreibbar ist.

6. Zweiwegeventil (1) nach Patentanspruch 5, wobei der Elektromotor (12) in einer Aufnahme (13) des Ventilgehäuses (3) angeordnet ist.

7. Zweiwegeventil (1) nach Patentanspruch 5 oder 6, wobei der Elektromotor (12) mit einem ersten längsseitigen Ende (14) der Exzenterwelle (8) verbunden ist.

8. Zweiwegeventil (1) nach einem der vorhergehenden Patentansprüche, wobei ein zweites längsseitiges Ende (15) der Exzenterwelle (8) in einem Lager (16) gelagert ist.

9. Zweiwegeventil (1) nach einem der vorhergehenden Patentansprüche, wobei die Exzenterwelle (8) mit einem Drehwinkel (17) von 90° bis 180° drehbar ist.

10. Sanitärarmatur (2), zumindest aufweisend:
- ein Armaturengehäuse (18) mit einem ersten Strahlbildner (19) und einem zweiten Strahlbildner (20); und
- ein Zweiwegeventil (1) nach einem der vorhergehenden Patentansprüche, mit dem eine Flüssigkeit wahlweise dem ersten Strahlbildner (19) oder dem zweiten Strahlbildner (20) zuführbar ist.
